# EUROPEAN PATENT SPECIFICATION

(11) **EP 2 245 299 B1**
(45) Date of publication and mention of the grant of the patent: **08.04.2015**
(21) Application number: 09707198.9
(22) Date of filing: 06.02.2009
(51) Int. Cl.: F03B 13/20, F03B 13/18

(54) **WAVE ENERGY CONVERSION APPARATUS**
WELLENENERGIEUMWANDLER
APPAREIL DE CONVERSION DE L'ÉNERGIE DES VAGUES

(30) Priority: 07.02.2008 GB 0802291
(43) Date of publication of application: 03.11.2010
(73) Proprietor: Pure Marine Gen Limited, Belfast BT9 9DT (GB)
(72) Inventor: BREWSTER, Paul, Belfast BT3 9DT (GB); IRWIN, Philip, Belfast BT3 9DT (GB)
(74) Representative: Waller, Stephen
(86) International application number: PCT/GB2009/050116
(87) International publication number: WO 2009/098514

(56) References cited:
- WO-A1-02/059480
- WO-A2-2005/094450
- DE-A1- 10 336 153
- GB-A- 2 002 052
- US-A1- 2007 126 239
- US-A1- 2007 257 491
- US-B1- 6 575 712

## Description

The wave energy resource remains one of the largest untapped energy sources in the world. Wave energy occurs due to movements of water near the surface of the sea. Waves are formed by winds blowing over the water surface. This motion carries kinetic energy, the amount of which is determined by the speed and duration of the wind, the area of the sea surface over which is blows, the water depth and sea bed conditions. Wave energy is also influenced by interaction with tidal movements.

Many attempts have been made to use wave energy to produce electricity, potable water or other useful energy related products.

The majority of the commercially accessible resource is contained in water depths greater than 20m, usually termed offshore.

To be able to exploit this resource at commercially viable costs, a wave energy converter typically needs to be floating and self reacting, having a floating displacer comprising a body to be moved by the waves and a reactor comprising a body to provide reaction to the displacer whereby the kinetic energy of relative movement of the reactor and displacer due to wave action can be absorbed by suitable means, such as dampers, pumps or turbines.

The key factor in the development of offshore wave energy devices is the costs of energy calculated by considering the capital costs to build and deploy the devices, the operation and maintenance of the array of devices in the wave farm, and the overall annual productivity in terms of electricity generated and supplied via the transmission system to the end users. Previous developments for floating self reacting wave energy devices have concentrated on heaving point absorbers and hinged raft devices.

A Point absorber can be described as a floating structure that absorbs energy in all directions by virtue of its movements at or near the water surface. It may be designed to resonate and can capture power over a width of incident wave frontage that is wider than the width of the device.

This is attractive for economic reasons.

Devices that are designed to extract power from the heave motions induced by the waves have a maximum width over which they can absorb wave energy that is equal to the wavelength / twice pi (λ/2π).

Heaving point absorbers cannot take advantage of horizontal motion induced by the waves.

Examples include:-
Finavera Renewables - Aquabuoy
Wavebob Ltd. - WaveBob
Ocean Power Technologies - PowerBuoy

The Pelamis has a different arrangement, being a hinged raft type wave energy device, that is a snake like structure that absorbs wave energy through both the up and down and side to side motion of the device. While the Pelamis can be referred to as a multi-mode wave energy device, it is not a point absorber and it derives its reference from its length. Therefore, it is typically long in relation to the waves, whereas point absorbers tend to be buoy type structures whose width is small relative to the wavelengths from which it is designed to efficiently absorb power.

It is desirable to produce useful power from both the vertical and horizontal motions induced in a system. A point absorber that could absorb power from both the vertical and horizontal motions of the device due to the incident wave can absorb power over a width up to three times that of a heave only device, and the maximum absorption width is given as 3λ/2π. Some attempts have been made to develop such a system but appear to be impractical to realise or unlikely to realise costs of generating electricity to be of any interest for commercial development.

A known design for a wave power generating apparatus that attempts to generate useful power from both the horizontal and vertical movement of waves is disclosed in GB 2 414 771. The apparatus comprises a float, a reaction vessel and a plurality of rams between the float and the reaction vessel, where relative vertical and/or angular movement between the float and the reaction vessel can be converted via the rams into useful power. However, the rigid links between the float and the reaction vessel are prone to large bending moments and likely to be impractical and expensive to engineer.

GB 2 002 052 discloses a pump for wave energy conversion.

A design for a multi-mode point absorber has been developed by Nick Wells, known as the Tetron. This device uses angled struts arranged around a central sphere, each strut having a reaction mass at a distal end thereof. The reaction masses are interconnected by non-rigid tethers. Using this arrangement, energy from wave motion can be absorbed in both horizontal and vertical directions. However, the Tetron structure is impractical due to large bending stresses on the struts.

US 4453894 discloses an installation for exploiting the energy of oceans, comprising at least one floating-member, or float, capable of moving along the surface of the sea under the action of waves, and at least one reference-member deeply submerged, said reference-member being substantially unaffected by the waves. As the reference-member is a substantially immovable member, relative movement between the floating member and the reference member is dependent solely on the movement of the floating member. Consequently, the generation of power is dependent solely on the movement of the floating member.

An object of the present invention is to provide a multi-mode point absorber that is a floating, self-reacting wave-energy converter that captures power from both the vertical and horizontal energy components in the ocean's waves.

According to the present invention there is provided a wave energy conversion apparatus according to claim 1.

As both the one or more buoyant members and the one or more reaction masses are movable, increased relative movement between both the member(s) and mass(es) can be achieved. For example, if a passing ocean wave causes a buoyant member to oscillate, the oscillation of the buoyant member is transmitted to a reaction mass via the linkages so as to provide two dynamically oscillating bodies. Both the buoyant member and the reaction mass will each possesses kinetic energy which can be converted to useful power. If both the buoyant member and the reaction mass oscillate out of synchronisation, the total amount of relative movement between the buoyant member and the reaction mass is increased.

As both the buoyant member and the reaction mass are movable, the amount of relative movement between the buoyant member and mass that is required to generate a particular amount of power is less than the relative movement between the buoyant member and mass that would be required to generate the same amount of power if either the buoyant member or reaction mass was immovable (i.e. fixed). Undercurrents flowing across the reaction mass(es) also provide kinetic energy to the reaction mass(es). Moreover, both the buoyant member(s) and the reaction mass(es) are free to undergo lateral movements with respect to one another which can increase the amount of useful power produced by the apparatus.

In particular, having both the buoyant member and reaction mass moving allows the same power to be extracted compared to having one fixed body and one moving body-as-per US 4453894. Such power- can also be extracted with a shorter 'stroke' of an energy converter such as a power take off mechanism.

The buoyant member(s) are surface piercing bodies whose mass is less than the volume of water they displace, thereby giving the surface piercing body a net positive buoyancy. The reaction mass(es) are submerged bodies whose mass is greater than the volume of water they displace, thereby giving the submerged body a net negative buoyancy.

The relative movement between the or each buoyant member and the or each reaction mass may be caused by sea or ocean wave movements, which can also include tidal movements and currents (including undercurrents).

The one or more buoyant members may be axisymmetric (i.e. symmetrical about an axis, said axis preferably being parallel to the wave direction, such as a cylinder). Such a design enables members to respond to waves from any direction. The one or more reaction masses may be axisymmetric. Such a design enables the masses to respond to undercurrent forces from any direction. The one or more buoyant members may have any suitable shape, aspect or design. Preferably, the one or more buoyant members are cylindrical. The one or more buoyant members may be toroidal. The one or more reaction masses may have any suitable shape, aspect or design. Preferably, the one or more reaction masses are torus shaped, or cylindrical, or ellipsoid or spherical.

The one or more buoyant members and the one or more reaction masses may be designed to have different heave, surge and pitch responses (both in amplitude-and phase) to motion by waves or each other. Preferably, the hydrodynamic properties of at least one of the one or more buoyant members are different to the hydrodynamic properties of at least one of the one or more reaction masses. Incident sea/ocean waves will cause the buoyant member(s) to oscillate. The oscillations of the buoyant member(s) are transmitted to the reaction mass(es) via the linkages. Due to their different hydrodynamic properties the buoyant member(s) and reaction mass(es) will each oscillate at different amplitudes and phases (i.e. the reaction mass(es) and buoyant member(s) each have different heave, surge and pitch responses to the incident ocean/sea waves). This results in an overall increase in the relative movement between the buoyant member(s) and the reaction mass(es). It should be noted that the buoyant member(s) and reaction mass(es) will also each oscillate at amplitudes and phases that differ to the amplitude and phase of the incident ocean/sea waves, (although generally the frequency of the wave force is the same for both).

The linkages between the oscillating bodies that react against each other includes cables (or non-rigid links), designed to be permanently in tension that provides a much more practical and cost effective solution than rigid connections or struts and avoids the need for bearings or guides along these connections.

The linkages generally remain taut between the buoyant member and reaction mass. Preferably the linkages are taut so that movement of the masses or members is fully transmitted to each other. For example, the movement of the waves along the sea/ocean surface causes the buoyant member to oscillate. As the linkages are taut, the oscillating movement of the buoyant member is fully transmitted to the reaction mass so it too will begin to oscillate. As both the buoyant member and reaction mass oscillate the level of tension in the linkages vary between a high level and low level of tension.

When the apparatus is in use, the linkages will always remain in tension. The tension within the linkages can vary, for example tension within the linkages may vary between 1 N and approximately 25,000kN as the reaction mass(es) and the buoyant member(s) oscillate.

Preferably, in use, the linkages have a tension of approximately 10,000 KN when the buoyant member(s) and reaction mass(es) is/are not moving (for example, when the sea/ocean water is calm).

The linkages may be arranged such that they are orientated at an angle relative to a plane defined by at least one or the one or more buoyant members. The linkages may be may be arranged such that they are orientated at an angle relative to a plane defined by at least one of the one or more reaction masses. Each of the linkages may be arranged such that they are orientated at the same or different angles. Preferably each of the linkages is arranged such that they are orientated at the same angle when the buoyant member and the one or more reaction masses are not moving. The angle of orientation of the linkages may be between 0 and 90 degrees.

The linkages are connected to the buoyant member(s) and the reaction mass(es) at points of contact. Preferably, the distance between the points of contact on the one or more reaction masses is greater than the distance between the points of contact on the one or more buoyant members. Such an arrangement ensures that the distance between adjacent linkages decreases in the direction from the one or more reaction masses towards the one or more buoyant members.

The linkages can have any length. Preferably the linkages have a length greater than 5m.

At least one of the linkages may comprise one or more biasing means. At least one of the linkages may further comprise one or more damping means. Preferably, each of the linkages comprises both biasing means and damping means. Preferably, each of the linkages comprises an equal number of biasing means and damping means. The biasing means may be a spring. The damping means may be a damper.

Preferably, the biasing force of the biasing means is adjustable. For example, if a spring provides the biasing means then biasing force may be adjusted by adjusting the spring stiffness. Preferably, the damping force of the damping means is adjustable. The advantage of providing adjustable damping and biasing means is that it permits tuning of the apparatus. By adjusting the damping and biasing forces the relative movement between the one or more buoyant members and the one or more reaction mass can be changed, when applying a particular force. For example, increasing the biasing force of the biasing means restricts the relative movement between the one or more buoyant members and the one or more reaction members, so that an increased force is required to effect relative movement between the buoyant member and reaction mass.

The linkages may provide a stiffness of between 100-100,000 kN/m. Preferably, the linkages provides a stiffness of approximately 2,000 kN/m. The linkages may provide a damping (resistance) between zero and infinity, generally in the range of 100-100,000 kNs/m. Preferably, the linkages provide a damping (resistance) of approximately 500-10,000 kNs/m. The wave energy conversion apparatus may further comprise a means by which the stiffness and/or the damping provided by the linkages can be adjusted. A user can adjust the stiffness and/or the damping of linkage to tune the wave energy conversion apparatus to suit the environment conditions within which the wave energy conversion apparatus is to be used.

Preferably, the linkages comprise steel, polymer or rope.

The apparatus may be tuned so that it is suitable for use in varying weather/sea conditions. The linkages may be length adjustable. The length of the linkages can be changed to alter the dynamic responses of the system thus enabling tuning / de-tuning. By adjusting the length of the linkages the apparatus may be tuned so that it is suitable for use in varying weather conditions. For example, the length of the linkages may be increased for an apparatus that is to be used in stormy sea conditions. Increasing the length of the linkages enables the distance between the one or more buoyant members and the one or more reaction masses to be increased, thereby allowing the reaction masses to be located at a greater depth. This increases the stability of the apparatus in the water. Consequently, it can be said that the length adjustable linkages provide a means for tuning the apparatus so that it is suitable for use in varying weather conditions.

Furthermore, providing length adjustable linkages enables the angles of orientation of the linkages to be adjusted. Adjusting the angles at which the linkages are orientated alters the dynamic response of the apparatus when subjected to ocean movements such as waves and currents. In providing a means for adjusting the dynamics of the apparatus, increased control over power generation is achieved.

The apparatus may further comprise at least one drum. One or more of the linkages can be wound around the drum, or unwound from the drum, to allow the length of the linkage to be adjusted.The configuration and masses of the multi-mode point absorber of the present invention are selected so that the cable connections always remain under tension.

The linkages and damping mechanism that enable wave energy to be absorbed, are angled so that power can be captured from both the horizontal and vertical relative motions between the oscillating bodies.

Thus the present invention aims to provide an offshore wave energy device that has significant productivity advantages over known wave energy concepts using a structure and connections that are more practical and cost effective.

Preferably the or each reaction mass has at least two of said linkages connected thereto.

In one embodiment, said at least one extensible member comprises a spring or other elongate biasing member(s). Alternatively, said at least one extensible member may comprise a pressurised hydraulic or pneumatic ram. In a further embodiment, said at least one extensible member comprises a hose pump, being a specially reinforced elastomeric hose, whose internal volume decreases as it stretches. Any other means by which a resistance to this relative motion can be converted to useful power, such as electrical power, may be used.

Each linkage may comprise an elongate cable connected in series with said at least one extensible member.

Alternatively, each linkage may comprise an elongate elastic member defining said at least one extensible member.

In one embodiment, each linkage may comprise a cable connected to the or one of the buoyant members by means of an cantilevered lever arm having a first end pivotally mounted on said buoyant member and a second distal end connected to an end of said linkage, said at least one extensible member comprising a restoring means, such as a spring or pressurised ram, biasing the cantilevered lever arm in an upward direction.

The energy conversion means may include means for moving a fluid in response to relative movement between the or each buoyant member and the or each reaction mass and one or more converters for converting the kinetic energy of said fluid into useful power. The energy conversion means may include at least one magneto-hydrodynamic cell, said fluid comprising an electrically conductive fluid. Alternatively, the energy conversion means may comprise a turbine, for example a pelton turbine, driven by said moving fluid and driving an electricity generator.

The apparatus may further comprise one or more tethers extending between the one or more buoyant members or the or each reaction mass and a fixed location, such as the sea bed, for mooring the apparatus at said fixed location. Preferably said one or more tethers include, or are associated with, one or more converters for converting kinetic energy of relative motion between said one or more buoyant members or said one or more reaction masses and said fixed location into useful power. Preferably the or each reaction mass comprises a plurality of reaction members, means for allowing relative movement between said plurality of reaction members, and one or more converters for converting kinetic energy of such movement into useful power.

In one embodiment the or each reaction mass may comprise three reaction members, the reaction members and the buoyant member from which they are suspended being arranged in a suitable three dimensional configuration, for example tetrahedral.

The one or more reaction masses are preferably streamlined to minimise drag resistance of the dynamic motion of the reaction masses. The one or more reaction masses may have a spherical, toroidal or elliptical shape.

The one or more reaction masses may comprise a hollow body. The hollow body may have apertures or openings therein such that sea water can pass into the hollow body such that the hollow body does not comprise a pressure vessel. This would allow the hollow body to be made from a thin and cheap material as it would not have to withstand water pressure. The hollow body may be constructed as shell structures. These shell structures may be formed, for example, of steel and/or concrete. Preferably, the hollow body is filled with at least one of air, water or other suitable material, such as, sand or lead, to provide ballast.

The length of the linkages could be adjusted by altering the ballasting of the hollow body, for example, to increase the length of the linkages, air within the hollow body could be replaced with water. This causes an increase in the weight of the hollow body thus causing the linkage to stretch. Conversely, to shorten the linkages water within the hollow body could be replaced with air.

At least one of the one or more reaction masses may have a total volume of between 500-4500 cubic meters. Preferably, at least one of the one or more reaction masses has a total volume of approximately 3149 cubic meters

In one example at least one of the one or more reaction masses may have a total weight of between 750 - 3000 tonnes. At least one of the one or more reaction masses may have a total weight of between 1,400 - 1500 tonnes.

At least one of the one or more reaction masses may comprise concrete that has a volume of approximately 750 cubic meters. The remaining volume may be partially or fully filled with water or other ballast (for example, sand and/or lead) to increase the weight of the or each reaction mass to a weight of approximately 4,200 tonnes. As its maximum buoyancy force is ∼3150 tonnes on its own, the reaction mass would sink. However when connected to the cylindrical buoy with the angled linkages, which are likely to be made from steel or polymer rope cables, the net result is that the cylindrical buoy now floats with a draft of ∼10m and the linkages have a tension of ∼1,000 tonnes.

It is preferable to form the reaction mass as cheaply as possible. One particularly suitable material is concrete.

One or more further reaction masses or counter weights may be connected to the one or more reaction masses via further elongate non-rigid linkages. Such further elongate non-rigid linkages may be provided with or associated with one or more converters for converting kinetic energy of relative movement between the or each reaction mass and said one or more further reaction masses due to wave action into useful power.

The buoyant member may comprise a cylindrical buoy. The cylindrical buoy may comprise a water-tight structure. Preferably, the buoyant member has a diameter of between 3m- 40m. More preferably, the buoyant member has a diameter of between 10m -30m. Most preferably, the buoyant member has a diameter of approximately 20m.

Preferably, the buoyant member comprises concrete. Preferably, the buoyant member has a weigh of between 1000 -4000 tonnes. More preferably, the buoyant member has a weight of approximately 2,200 tonnes. Such a buoyant member would, on its own, float with a draft of ∼6.8m.

In one embodiment, the apparatus may comprise a single one of said buoyant members and a single one of said reaction masses, said plurality of linkages extending there-between.

In an alternative embodiment, the apparatus may comprise a plurality of said buoyant members and a plurality of said reaction masses, a plurality of said linkages being provided between said plurality of buoyant members and said plurality of reaction masses, wherein each reaction mass is connected to at least two adjacent buoyant members by respective linkages, whereby relative movement between said plurality of reaction masses and said plurality of buoyant members in both horizontal and vertical directions due to wave action can be converted into useful power.

A means for restricting the relative movement between the or each buoyant member and the or each reaction mass may be further provided. Preferably, the means for restricting the relative movement between the or each buoyant member and the or each reaction mass prevents relative movement between the or each buoyant member and the or each reaction mass. The means for restricting the relative movement between the or each buoyant member and the or each reaction mass may be used to prevent the apparatus from generating any power while maintenance work and/or repair work is carried out on the apparatus in situ.

According to a further aspect of the present invention, there is provided a reaction mass suitable for use in the energy converting apparatus as described above.

According to a further aspect of the present invention, there is provided a buoyant member suitable for use in the energy converting apparatus as described above.

Embodiments of the present invention will now be described, by way of example only, with reference to the accompanying drawings, in which:-
Figure 1 is a schematic view of a wave energy conversion apparatus according to a first embodiment of the present invention;
Figure 2 illustrates a modification of the embodiment of Figure 1;
Figure 3 illustrates the internal components of the buoyant member of the embodiment shown in Figure 2;
Figure 4 illustrates tuning a wave energy conversion apparatus according to a further embodiment of the present invention;
Figure 5 is a schematic view of a wave energy conversion apparatus according to a further embodiment of the present invention;
Figure 6 is a schematic view of a configuration of the power take off system, which is part of-the wave energy conversion apparatus according to a further embodiment of the present invention;
Figure 7 provides a magnified view of an assembly of figure 6;
Figure 8 is a schematic view of a wave energy conversion apparatus according to a further embodiment of the present invention; and
Figure 9 is a schematic view of a wave energy conversion apparatus according to a further embodiment of the present invention.

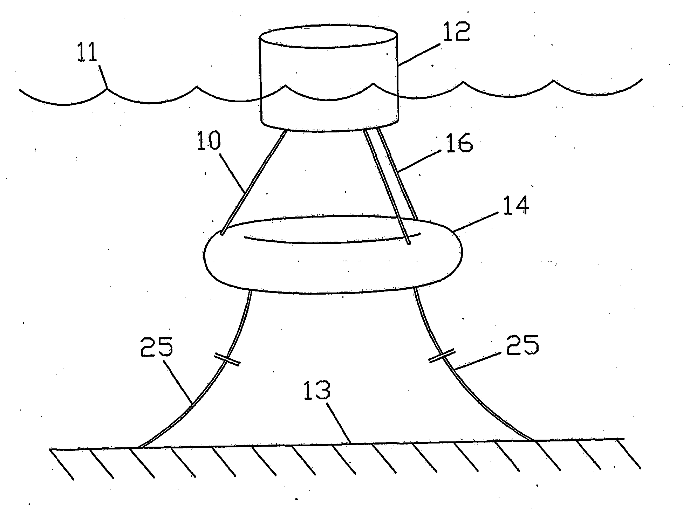

In a first embodiment, as shown in Figure 1, a wave energy conversion apparatus 10 comprises a movable buoyant member being a floating buoy 12 floating on the ocean surface 11. The floating buoy 12 is connected to a movable reaction mass being a submerged reaction structure 14 via angled tethers 16, said angled tethers being associated the linkages and power take off means that allow relative movement between the reaction structure 14 and the buoy 12, that provide a restoring force to maintain tension in the tethers 16, and that enable power to be extracted by resisting the relative vertical and horizontal motion of the surface buoy 12 and the submerged reaction structure 14. The buoy 12 can be any shape or size as long as it is designed to float and support the reaction structure 14 therebeneath. The tethers 16 may be formed from any suitable material having sufficient flexibility and tensile strength.

In one embodiment, the power take off means may comprise a Dunlop tube pump arrangement and a turbine, for example a Pelton wheel, and electrical generator.

Alternatively, a set of hydraulic rams acting in series with the angled tethers may be used. This may integrate a more efficient power take off system with the tethered system, such as a hydraulic pump based system. The efficiency of the hose pump / Pelton wheel is unlikely to be as high as a hydraulic power take-off system, with hydraulic rams powering motor generator sets, preferably with power smoothing provided through accumulators.

Alternatively, the power take off means may comprise a hose pump consisting of a specially reinforced elastomeric hose whose internal volume decreases as it stretches. The rise and fall of the float stretches and relaxes the hose thereby pressurising seawater, which may be fed through a non-return valve to a turbine and generator unit.

Alternatively, the hydraulic rams could be connected to a magneto hydrodynamic (MHD) unit, wherein an electrically conductive fluid passed through a magnetic field, generating a current therein. The MDH unit could be developed to provide a variation in resistance through replacing the fixed magnets with electro magnets or varying the electrical load on the MHD device, controlled by varying the electric current in the coils. US patent No. 4,151,423 discloses a magneto-hydrodynamic (MHD) electric generator for the direct energy conversion of the kinetic energy using ducted sea water flowing through a constricted portion of a duct exposed to a strong magnetic field, whereby electricity is generated due to the flow of the electrically conductive liquid through the magnetic field.

Advantageously the magnetic field may be generated by an electromagnet, enabling the magnetic field to be varied by varying the power supplied to the electromagnet, whereby the resistance to flow of the fluid through the duct may be varied. The ability to vary the resistance of the damping link that absorbs the energy from the wave motion can have advantages in maximising the productivity of the wave energy device through tuning for the different sea conditions.

A hose pump may be connected to the magneto-hydraulic unit. The advantages of such a system involves combining a reliable, long stroke tube pump with a resistance that can be designed to provide a more variable resistance and more efficient means of generating electricity than the hose pump / turbine combinations used previously.

Because the submerged reaction structure 14 is suspended below the floating buoy 12 by means of non-rigid tethers 16, which may comprise steel cables or any other suitable mooring material, such as rope, this removes the need for guides/bearing surfaces, with significant reductions in size and costs compared to if it had to be a rigid connection to transmit the forces generated by relative movement between the reaction structure 14 and the buoy 12. Using cable linkages eliminates the need bearings and guides or struts that would otherwise have to overcome significant bending stresses and fatigue design issues.

At least two tethers 16 may be provided between the buoy 12 and the reaction structure 14 to ensure that the tethers 16 extend at an inclined orientation whereby induced motion between the buoy 12 and the reaction structure 14 in both the vertical and horizontal directions can be absorbed. In the embodiment shown in Figure 1, three tethers 16 are provided arranged at equal spacing around the periphery of the reaction structure 14 to ensure that energy can be adsorbed from all relative vertical and horizontal motion between the buoy and the reaction structure, regardless of the direction of such motion. The linkages may be designed to provide spring components and damping components in the connection between the buoy and submerges structure that enable the absorption of energy from the relative motion of the buoy and submerged structure induced by the action of the incident waves travelling on the ocean surface 11.

The reaction structure 14 comprises an arrangement of one or more streamlined bodies, having a shape optimised to keep the effects of drag on the motion of the reaction structure to a minimum. Such structure may comprise one or more of a spherical tank, a cylindrical tank, a combination of cylinders connected together in a circular or multi-sided shape, or any combination of the above connected together either with rigid connections or cable connections. The submerged reaction structure does not necessarily need to be designed to be water tight. Relative motion between the components of the submerged structure can be used to absorb wave energy, if advantageous to do so, by having damping systems, and spring components if necessary connected between the parts of the submerged structure. Maintaining the buoyancy of the entire device may require some additional buoyancy to be added to the submerged structure. Therefore some water tight compartments may be needed.

The reaction structure 14 may be tethered to the sea bed 13 or to a fixed structure by mooring lines 25 to moor the apparatus at a fixed location. The position of the sea bed 13 in Figure 1 (and the other relevant drawings herewith) is not to scale in that the mooring lines 25 usually extend further than the tethers 16 (and associated linkages), such as being >30m or 50-100m long or longer, compared to the tethers 16, etc. being several meters long such as 5-50m long, or 15-30m long, such that the reaction structure 14 is usually only several meters below the buoy 12. Such mooring lines may alternatively be connected to the buoy 12. It is also envisaged that further tethers may be provided extending between the buoy 12 and/or the reaction structure 14 and the sea bed 13 or fixed structure associated with further power take off means for converting the kinetic energy of relative motion between the buoy 12 and/or the reaction structure 14 and the sea bed 13 or fixed structure.

It should be understood that whilst one reaction structure 14 is illustrated in Figure 1, any number of reaction structures could be suspended from the buoyant member 112. Alternatively, where a plurality of reaction structures are provided, the first reaction structure may be suspended from the buoyant member and each successive reaction structure could be suspended from the previous reaction structure to provide a chain of suspended reaction structures.

Further, the possible configuration of the submerged structure 14 is not restricted to the arrangements shown herewith, and indeed can be realised as a structure with any number of sides, such a square, hexagon etc. including a circular that does not necessarily need to have a gap in the middle.

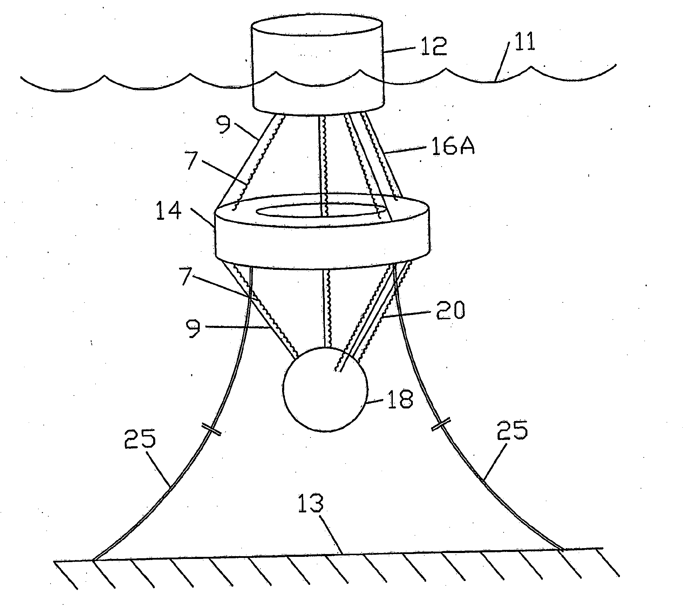

An alternative embodiment of the invention is shown in Figure 2. As is evident from the drawing the buoyant member 12 is connected to the reaction structure 14 by means of a plurality of linkages 16A. Each of the linkages 16A is comprises a spring component 7 and a damping component 9. As shown in Figure 2 an additional reaction mass or counter weight 18 is connected to the submerged reaction structure 14 by additional linkages 20, which can also be associated with further power take off means. As with linkages 16A, additional linkages 20 are also each composed of a spring component 7 and a damping component 9. Alternatively or additionally the additional reaction mass may be connected to the floating buoy structure 12. By providing an additional moving component in the system additional energy capture possibilities are introduced. Furthermore, the option of adding a counter weight could help to reduce stresses in the submerged reaction structure and provide a number of alternative mooring solutions.

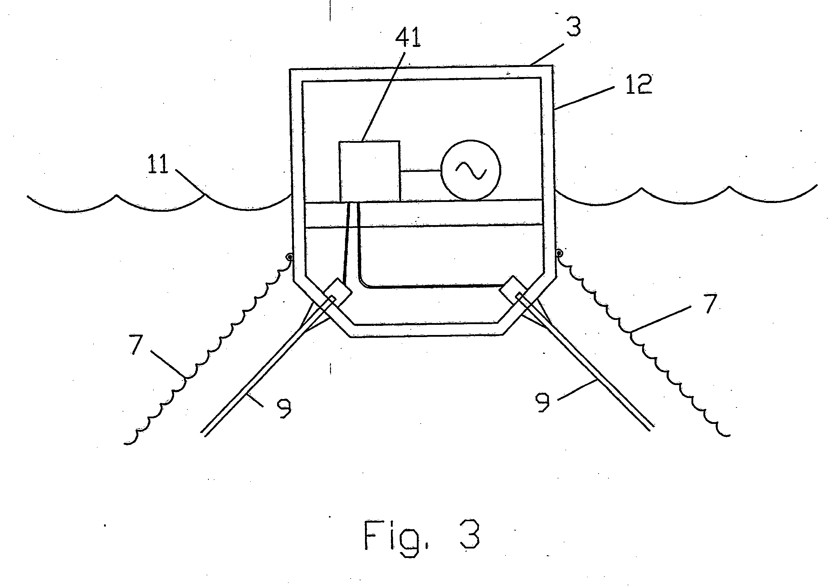

Figure 3 illustrates the internal components of the buoyant member 12 shown in figure 2. The buoyant member 12 comprises a housing 3. A power converter 41 is located inside the housing 3 of the buoyant member 12. The power converter 41 is connected to damper components 9 of linkages 16A such that relative movement between the reaction structure (not shown) and the buoyant member 12 can be converted to useful power. The spring components 7 of the linkages 16A are also shown connected to the external of the housing 3 of the buoyant member 12.

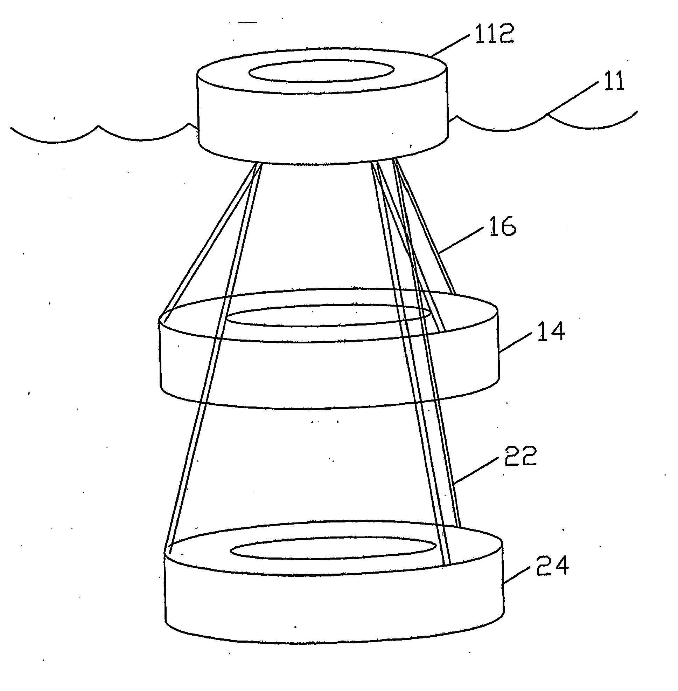

Figure 4 illustrates a further embodiment of the invention in which a torus shaped buoyant member 112 is provided. Reaction structure 14 is suspended by means of tethers 16 from the buoyant member 112. A second reaction structure 24 is suspended from the buoyant member 112 and submerged. The second reaction structure 24 is suspended via additional angled tethers 22. The additional angled tethers 22 are associated with linkages and power take off means. The power take off means also provides a restoring force to maintain tension in the additional tethers 22 and also enable power to be extracted by resisting the relative vertical and horizontal motion of the buoyant member 112 and the submerged reaction structure 24. In the embodiment of Figure 3 useful power is generated by relative movement between the buoyant member 112 and either of reaction structures 14 or 24. Useful power is also generated by relative movement between the reaction structures 14 and 24. It should be understood that while two reaction structures 14 and 24 are illustrated in Figure 4, any number of reaction structures could be suspended from the buoyant member 112. Alternatively, where a plurality of reaction-structures are provided,-the first reaction structure may be suspended from the buoyant member and each successive reaction structure could be suspended from the previous reaction structure to provide a chain of suspended reaction structures.

The possible configuration of the submerged structure 14 is not restricted to these arrangements and indeed can be realised as a structure with any number of sides, such a square, hexagon etc. including a circular structure that does not necessarily need to have a gap in the middle.

Figure 4 also illustrates a further possible embodiment of the invention in which the reaction structure 14 is suspended in a first position as shown by means of tethers 16 from the buoyant member 112. When desired or necessary, the apparatus can be 'tuned' to be suitable for use in varying weather and/or sea conditions. To achieve this, the tethers 16 could be extended from the buoyant member 112 to allow the reaction structure 14 to reach a position shown by the 'second' reaction structure 24, further suspended below the buoyant member 112, such that the tethers now extend as 'new angled' tethers 22.

The general principle of the submerged structures is to provide mass to the dynamic system of oscillators while minimising introducing drag effects in the dynamic system. The submerged structure will be engineered to provide this 'mass' as cheaply as possible and in addition keep the structure as streamlined as possible to reduce any drag resistance of the dynamic motion of the entire wave energy converter. A particularly suitable material for the reaction structure may be concrete, due to its low cost and ease of moulding.

The reaction structure may alternatively comprise a hollow body having apertures therein to allow sea water to enter whereby the structure is not pressurised and thus does not need to be designed as a pressure vessel. The structure may be open to allow water to flow through the structure to further reduce drag.

It has been established that, on a site with average power levels of ∼60kW/m, a wave energy conversion apparatus according to the present invention could generate 4,700 GWh of electricity per year. For comparison purposes, a similar sized device configured to capture power from only the heave motion could generate 3,000GWh.The potential for increase in power output of over 150%, with similar structural costs to the heaving buoy concept, may provide a step change reduction in the costs of energy, where the ratio of power generated to construction costs is a key factor.

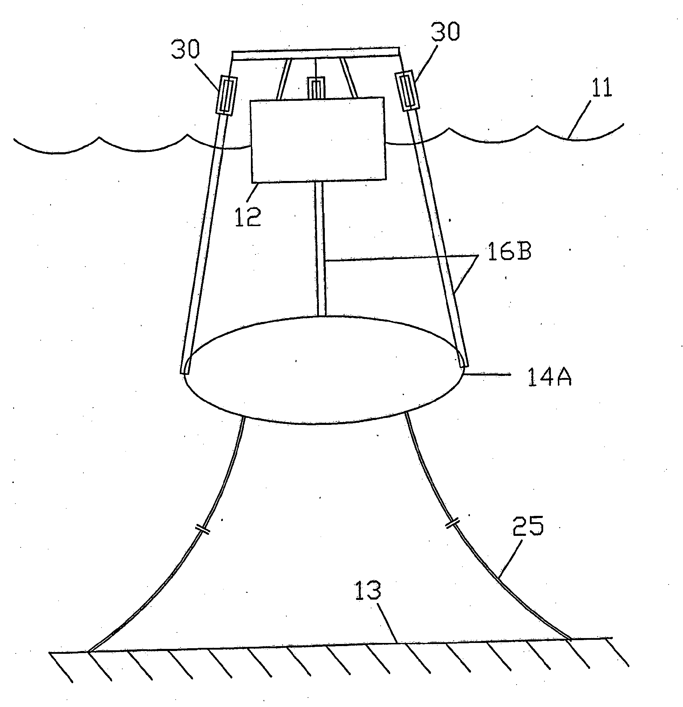

Figure 5 illustrates a further embodiment of the invention. An oval-shaped reaction structure 14A is connected by means of linkages 16B to a buoyant member 12. The linkages 16B are formed from steel cables and may be connected in series with a spring damper arrangement 30 to provide the required resilience to enable the overall length of the linkages 16B to vary between extended and unextended positions to permit relative movement between the buoy 12 and the reaction structure 14A. The spring damper arrangements may comprise pressurised rams whereby the pressurised fluid therein provides the required restoring force to bias each linkage 16B to its unextended configuration and thus maintain tension in the linkages16B during relative movement between the buoy and the reaction structure.

The wave energy conversion apparatus may be tethered to the sea bed 13 or to a fixed structure in a similar manner to that shown in figure 1. The mooring system may consist of a combination of mooring lines and buoys, if necessary, connected to either or both the submerged tank and the floating buoy, designed to connect the device to the sea-bed for station-keeping purposes. Some additional damping system may be incorporated in the mooring system that would provide additional absorption of wave energy. The mooring lines 25 can be either slack, compliant configurations or taut as required for a feasible design solution. An array of devices can be inter-connected using shared mooring cables and/or anchors to reduce the costs of installation of an array of devices.

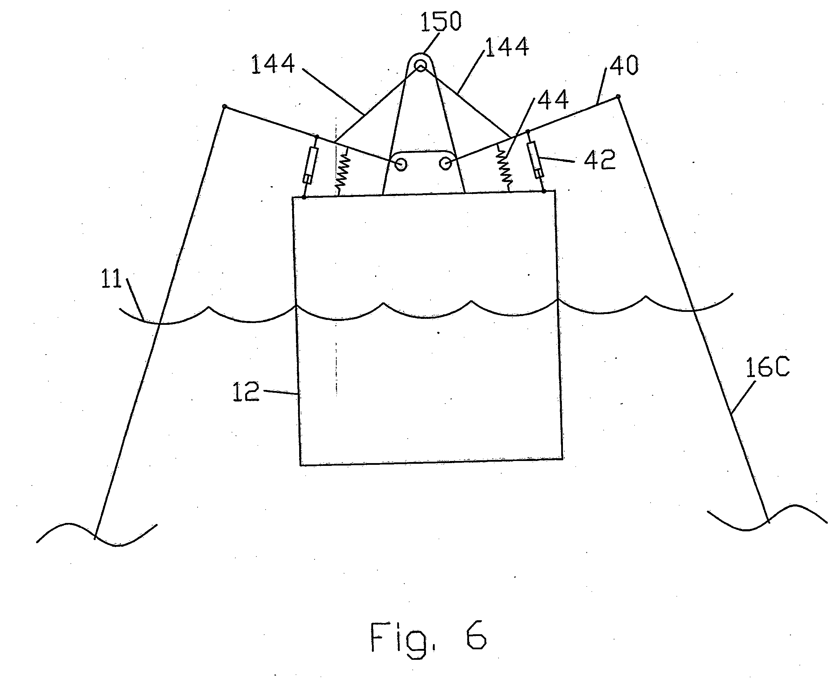

Another embodiment of the invention is shown in Figure 6, wherein linkages in the form of tethers 16C, comprising high tensile cables, are provided. Each tether 16C is connected to the buoy 12 via a cantilevered lever arm 40. Damper 42 are provided between each cantilevered lever arm 40 and the buoy 12 along with springs 44 for biasing the cantilevered lever arm 40 in an upwards direction. Elastic cords or other elastomeric members 144 connect the cantilevered lever arms 40 to a support member 150. Elastic cords 144 also act to bias the cantilevered lever arms 40 in an upwards direction. The elastic cords 144 and springs 44 may be omitted if the damper 42 alone provides sufficient restoring force. The arrangement as shown in figure 6 has the advantage that all of the functional components of the power take of means are provided in a readily accessible location above the water surface.

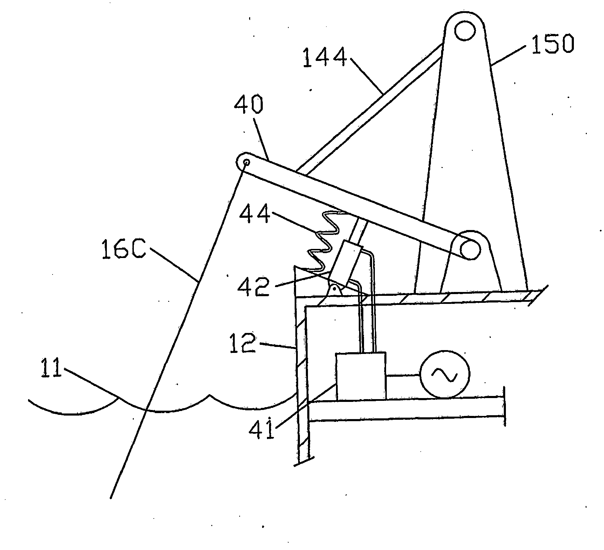

Figure 7 provides a magnified view of the cantilever arm 40, damper 42, elastic cord 144 and spring 44 assembly of Figure 6. As is evident from the drawings the damper 42 is connected to a power conversion means 41. Relative movement between the reaction structure (not shown) and the buoyant member 12 is transmitted, by means of the tethers 16C, to the cantilever arm 40 to effect movement thereof. The kinetic energy of the cantilever arm 40 is transmitted by means of the damper 42 to an energy converter 41 where useful power is produced. Additionally, the elastic cord 144 and the spring 44 apply a restoring force to the cantilever arm 40 which forces the cantilever arm 40 to return to its original position. The kinetic energy that the cantilever arm 40 possesses, as it is returned to its original position under the influence of the biasing force applied by the spring 44 and elastic cord 144, is also converted to useful power by means of the energy converter 41.

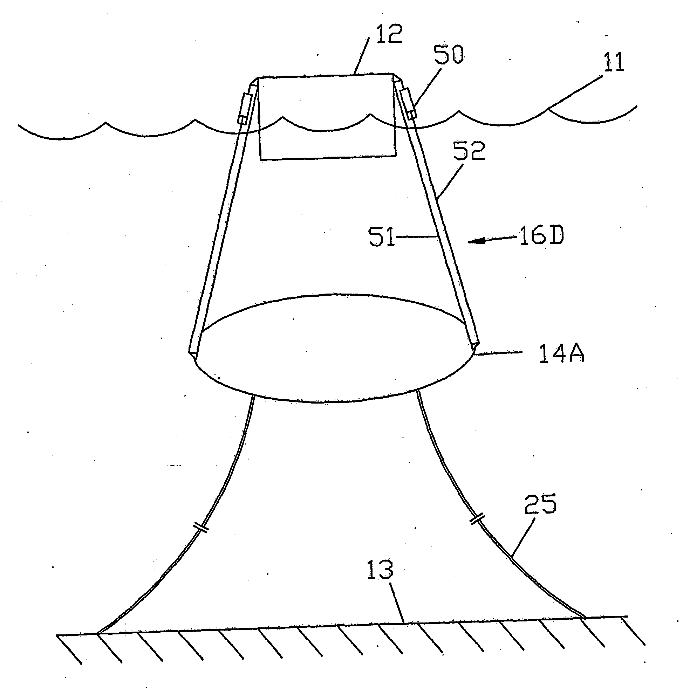

A further embodiment of the invention is shown in Figure 8. Similar to the embodiment shown in figure 5, the embodiment shown in Figure 8 also comprises an oval-shaped reaction structure 14A. A plurality of linkages 16D is provided which connect the reaction structure 14A to the buoyant member 12. The linkages 16D provide the required degree of elasticity to permit relative movement between the buoyant member 12 and the reaction structure 14A, either by being formed from an elastic material and/or by being connected in series with a spring. In this embodiment, each of the linkages 16D comprises a damper 50 and a tether 51. The damper 50 is connected in parallel with the tether 51 by means of a further relatively non-elastic cable 52. Means are provided for biasing the damper towards a non-extended configuration to maintain tension in the cable 52. Such biasing means may be provided by the working fluid with the damper 50.

Each tether 51 may comprise, or be connected in series with, a hollow tube defining a hose pump, avoiding the need for a separate damper.

Various modifications and-variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

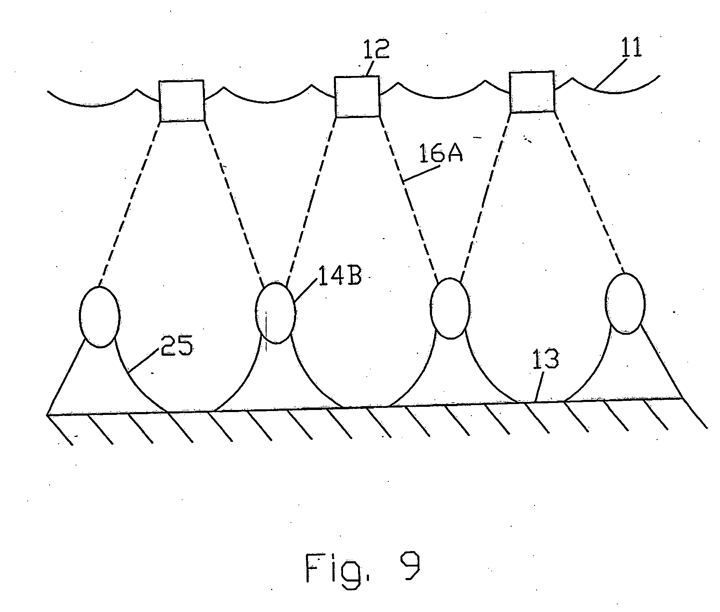

While the embodiment described above discuss a single reaction structure suspended from a single buoy, in practice it is likely that an array of such structures would be provided to provide increased power generation capability. Such array of structures may be interlinked to form a dynamic structure, as illustrated in Figure 9, with a plurality of buoys 12 and a plurality of spherical-shaped reaction structures 14B, interconnected together by a plurality of angled linkages 16A and mooring tethers 25, such that relative motion between each reaction structures and/or each buoy and the reamining buoys and reaction structures can be converted into useful power.

In such arrangement, each reaction structure may be connected to several adjacent buoys by means of inclined tethers and each buoy in turn connected to several adjacent reaction members to define an array of interlinked members where vertical and horizontal movement between the members can be converted to useful power. For example, each buoy may be connected to three reaction structures and each reaction structure connected to three buoys to define a tetrahedral array of interconnected structures.

## Claims

1. A wave energy conversion apparatus (10) comprising one or more movable buoyant members (12); one or more movable reaction masses (14) located independent of the sea bed; said one or more reaction masses (14) being suspended beneath said one or more buoyant members (12) by a plurality of linkages (16), each linkage (16) comprising an elongate non-rigid member which allows the or each buoyant member (12) and the or each reaction mass (14) to each move relative to one another; at least two of said linkages (16) extending between the or one of said one or more buoyant (12) members and the or one of said one or more reaction masses (14) at an orientation inclined to the vertical; each linkage (16) comprising, or being independently associated with, at least one extensible member whereby the effective length of each linkage (16) can vary between an extended and a non-extended configuration such that the or each reaction mass (14) can move with respect to the or each buoyant member (12) and the sea bed in both a vertical and a horizontal direction, each extensible member providing a restoring force for biasing the respective linkage (16) to a non-extended configuration whereby the linkage (16) is maintained in tension, and one or more converters for converting kinetic energy of relative movement between the or each buoyant member (12) and the or each reaction mass (14) into useful power.

2. A wave energy conversion apparatus as claimed in claim 1, wherein the hydrodynamic properties of at least one buoyant member (12) is different to the hydrodynamic properties of at least one reaction mass (14).

3. A wave energy conversion apparatus as claimed in any preceding claim, wherein the or each reaction mass (14) has at least two of said linkages (16) connected thereto inclined in different directions.

4. A wave energy conversion apparatus as claimed in any preceding claim, wherein said at least one extensible member (16) comprises a biasing means (7,44) and/or a damper (9,30,42).

5. A wave energy apparatus as claimed in any preceding claim, wherein said at least one extensible member comprises a hose pump.

6. A wave energy conversion apparatus as claimed in any preceding claim, wherein each linkage (16C) comprises a cable connected to the or one of the buoyant members (12) by means of an cantilevered lever arm (40) having a first end pivotally mounted on said buoyant member (12) and a second distal end connected to an end of said linkage (16C), said at least one extensible member comprising a restoring means biasing the cantilevered lever arm (40) in an upward direction.

7. A wave energy conversion apparatus as claimed in any preceding claim, wherein said one or more converters include at least one magneto-hydrodynamic cell, wherein the magneto-hydrodynamic cell includes an electromagnet for generating a magnetic field, whereby the power supplied to the electromagnet can be varied to adjust the effective flow restriction of the cell to enable the apparatus to be tuned for use in different sea or ocean conditions.

8. A wave energy conversion apparatus as claimed in any preceding claim, wherein the or each reaction mass (14) comprises a plurality of reaction members, means being provided for allowing relative movement between said plurality of reaction members, including one or more converters for converting energy of such movement into useful power.

9. A wave energy conversion apparatus as claimed in claim 8, wherein the or each reaction mass (14) comprises a plurality of reaction members, the plurality of reaction members and the buoyant member (12) from which they are suspended being arranged in a suitable three dimensional configuration.

10. A wave energy conversion apparatus as claimed in any preceding claim, wherein said one or more reaction masses (14) have a spherical, toroidal or elliptical shape and/or wherein said one or more buoyant members (12) have a cylindrical shape.

11. A wave energy conversion apparatus as claimed in any preceding claim, wherein said one or more reaction masses (14) comprise a hollow body having apertures or openings therein.

12. A wave energy conversion apparatus as claimed in any preceding claim, wherein one or more further reaction masses or counter weights (18,24) are connected to the one or more reaction masses (14) via further elongate non-rigid linkages (20,22).

13. A wave energy conversion apparatus as claimed in claim 12, wherein said further elongate non-rigid linkages (20,22) are provided with or associated with one or more converters for converting kinetic energy of relative movement between the or each reaction mass and said one or more further reaction masses into useful power.

14. A wave energy conversion apparatus as claimed in any preceding claim, comprising a single one of said buoyant members (12) and a single one of said reaction masses (14), said plurality of linkages (16) extending therebetween.

15. A wave energy conversion apparatus as claimed in any one of claims 1 to 14, comprising a plurality of said buoyant members (12) and a plurality of said reaction masses (14B), a plurality of said linkages (16A) being provided between said plurality of buoyant members (12) and said plurality of reaction masses (14B), wherein each reaction mass (14B) is connected to at least two adjacent buoyant members (12) by respective linkages (16A), whereby relative movement between said plurality of reaction masses (14B) and said plurality of buoyant members (12) and the sea bed in both horizontal and vertical directions can be converted into useful power.

## Patentansprüche

1. Vorrichtung (10) zur Umwandlung von Wellenenergie, umfassend ein oder mehrere bewegliche schwimmfähige Elemente (12); eine oder mehrere bewegliche Reaktionsmassen (14), die sich unabhängig vom Meeresboden befinden; wobei die eine oder mehreren Reaktionsmassen (14) durch mehrere Verbindungsglieder (16) unter dem einen oder den mehreren schwimmfähigen Elementen (12) abgehängt sind, wobei jedes Verbindungsglied (16) ein langgestrecktes nicht starres Element umfasst, das es dem oder jedem schwimmfähigen Element (12) und der oder jeder Reaktionsmasse (14) ermöglicht, sich jeweils relativ zueinander zu bewegen; wobei sich mindestens zwei der Verbindungsglieder (16) in einer gegenüber der Vertikalen geneigten Orientierung zwischen dem oder einem von dem einen oder den mehreren schwimmfähigen Elementen (12) und der oder einer von der einen oder den mehreren Reaktionsmassen (14) erstrecken; wobei jedes Verbindungsglied (16) mindestens ein verlängerbares Element umfasst oder unabhängig damit assoziiert ist, wodurch sich die wirksame Länge jedes Verbindungsglieds (16) zwischen einer verlängerten und einer nicht verlängerten Konfiguration verändern kann, so dass sich die oder jede Reaktionsmasse (14) in sowohl einer vertikalen als auch einer horizontalen Richtung in Bezug auf das oder jedes schwimmfähige Element (12) und den Meeresboden bewegen kann, wobei jedes verlängerbare Element eine Rückstellkraft zum Vorspannen des jeweiligen Verbindungslieds (16) zu einer nicht verlängerten Konfiguration bereitstellt, wodurch das Verbindungsglied (16) unter Spannung gehalten wird, und einen oder mehrere Wandler zum Umwandeln von kinetischer Energie von Relativbewegung zwischen dem oder jedem schwimmfähigen Element (12) und der oder jeder Reaktionsmasse (14) in nutzbare Leistung.

2. Vorrichtung zur Umwandlung von Wellenenergie nach Anspruch 1, wobei die hydrodynamischen Eigenschaften mindestens eines schwimmfähigen Elements (12) von den hydrodynamischen Eigenschaften mindestens einer Reaktionsmasse (14) verschieden sind.

3. Vorrichtung zur Umwandlung von Wellenenergie nach einem der vorangehenden Ansprüche, wobei mindestens zwei der Verbindungsglieder (16) in unterschiedlichen Richtungen geneigt mit der oder jeder Reaktionsmasse (14) verbunden sind.

4. Vorrichtung zur Umwandlung von Wellenenergie nach einem der vorangehenden Ansprüche, wobei das mindestens eine verlängerbare Element (16) ein Vorspannmittel (7, 44) und/oder einen Dämpfer (9, 30, 42) umfasst.

5. Wellenenergievorrichtung nach einem der vorangehenden Ansprüche, wobei das mindestens eine verlängerbare Element eine Schlauchpumpe umfasst.

6. Vorrichtung zur Umwandlung von Wellenenergie nach einem der vorangehenden Ansprüche, wobei jedes Verbindungsglied (16C) ein Seil umfasst, das mittels eines auskragenden Hebelarms (40) mit einem drehbar an dem schwimmfähigen Element (12) angebrachten ersten Ende und einem mit einem Ende des Verbindungsglieds (16C) verbundenen zweiten distalen Ende mit dem oder einem der schwimmfähigen Elemente (12) verbunden ist, wobei das mindestens eine verlängerbare Element ein Rückstellmittel umfasst, das den auskragenden Hebelarm (40) in eine nach oben weisende Richtung vorspannt.

7. Vorrichtung zur Umwandlung von Wellenenergie nach einem der vorangehenden Ansprüche, wobei der eine oder die mehreren Wandler mindestens eine magnetohydrodynamische Zelle umfassen, wobei die magneto-hydrodynamische Zelle einen Elektromagneten zum Erzeugen eines Magnetfelds umfasst, wodurch die dem Elektromagneten zugeführte Leistung verändert werden kann, um die wirksame Fließbehinderung der Zelle zu verstellen, um zu ermöglichen, dass die Vorrichtung für die Verwendung in unterschiedlichen See- oder Meeresbedingungen abgestimmt werden kann.

8. Vorrichtung zur Umwandlung von Wellenenergie nach einem der vorangehenden Ansprüche, wobei die oder jede Reaktionsmasse (14) mehrere Reaktionselemente umfasst, wobei Mittel bereitgestellt sind, um Relativbewegung zwischen den mehreren Reaktionselementen zuzulassen, umfassend einen oder mehrere Wandler zum Umwandeln von Energie derartiger Bewegung in nutzbare Leistung.

9. Vorrichtung zur Umwandlung von Wellenenergie nach Anspruch 8, wobei die oder jede Reaktionsmasse (14) mehrere Reaktionselemente umfasst, wobei die mehreren Reaktionselemente und das schwimmfähige Element (12), von dem sie abgehängt sind, in einer geeigneten dreidimensionalen Konfiguration angeordnet sind.

10. Vorrichtung zur Umwandlung von Wellenenergie nach einem der vorangehenden Ansprüche, wobei die eine oder mehreren Reaktionsmassen (14) eine kugelförmige, torusförmige oder elliptische Form aufweisen und/oder wobei das eine oder die mehreren schwimmfähigen Elemente (12) eine zylindrische Form aufweisen.

11. Vorrichtung zur Umwandlung von Wellenenergie nach einem der vorangehenden Ansprüche, wobei die eine oder die mehreren Reaktionsmassen (14) einen hohlen Körper mit Ausschnitten oder Öffnungen darin umfassen.

12. Vorrichtung zur Umwandlung von Wellenenergie nach einem der vorangehenden Ansprüche, wobei eine oder mehrere weitere Reaktionsmassen oder Gegengewichte (18, 24) über weitere langgestreckte nicht starre Verbindungsglieder (20, 22) mit der einen oder den mehreren Reaktionsmassen (14) verbunden sind.

13. Vorrichtung zur Umwandlung von Wellenenergie nach Anspruch 12, wobei die weiteren langgestreckten nicht starren Verbindungsglieder (20, 22) mit einem oder mehreren Wandlern zum Umwandeln von kinetischer Energie der Relativbewegung zwischen der oder jeder Reaktionsmasse und der einen oder den mehreren weiteren Reaktionsmassen in nutzbare Leistung ausgestattet oder assoziiert sind.

14. Vorrichtung zur Umwandlung von Wellenenergie nach einem der vorangehenden Ansprüche, umfassend ein einziges der schwimmfähigen Elemente (12) und eine einzige der Reaktionsmassen (14), wobei sich die mehreren Verbindungsglieder (16) dazwischen erstrecken.

15. Vorrichtung zur Umwandlung von Wellenenergie nach einem der Ansprüche 1 bis 14, umfassend mehrere der schwimmfähigen Elemente (12) und mehrere der Reaktionsmassen (14B), wobei zwischen den mehreren schwimmfähigen Elementen (12) und den mehreren Reaktionsmassen (14B) mehrere der Verbindungsglieder (16A) bereitgestellt sind, wobei jede Reaktionsmasse (14B) durch jeweilige Verbindungsglieder (16A) mit mindestens zwei benachbarten schwimmfähigen Elementen (12) verbunden ist, wodurch Relativbewegung zwischen den mehreren Reaktionsmassen (14B) und den mehreren schwimmfähigen Elementen (12) und dem Meeresboden in sowohl horizontaler als auch vertikaler Richtung in nutzbare Leistung umgewandelt werden kann.

## Revendications

1. Appareil de conversion de l'énergie des vagues (10) comportant un ou plusieurs éléments flottants mobiles (12) ; une ou plusieurs masses de réaction mobiles (14) situées de manière indépendante par rapport au fond marin ; lesdites une ou plusieurs masses de réaction (14) étant suspendues sous lesdits un ou plusieurs éléments flottants (12) par une pluralité de liaisons mécaniques (16), chaque liaison mécanique (16) comportant un élément non rigide allongé qui permet à l'élément flottant ou à chaque élément flottant (12) et à la masse de réaction ou à chaque masse de réaction (14) de se déplacer chacun les uns par rapport aux autres ; au moins deux desdites liaisons mécaniques (16) s'étendant entre l'élément flottant ou l'un desdits un ou plusieurs éléments flottants (12) et la masse de réaction ou l'une desdites une ou plusieurs masses de réaction (14) selon une orientation inclinée par rapport à la verticale ; chaque liaison mécanique (16) comportant, ou étant indépendamment associée à, au moins un élément extensible ce par quoi la longueur efficace de chaque liaison mécanique (16) peut varier entre une configuration étendue et une configuration non étendue de telle sorte que la masse de réaction ou chaque masse de réaction (14) peut se déplacer par rapport à l'élément flottant ou à chaque élément flottant (12) et par rapport au fond marin à la fois dans une direction verticale et une direction horizontale, chaque élément extensible fournissant une force de rappel à des fins de sollicitation de la liaison mécanique respective (16) jusqu'à une configuration non étendue ce par quoi la liaison mécanique (16) est maintenue sous tension, et un ou plusieurs convertisseurs destinés à convertir l'énergie cinétique d'un mouvement relatif entre l'élément flottant ou chaque élément flottant (12) et la masse de réaction ou chaque masse de réaction (14) en une puissance utile.

2. Appareil de conversion de l'énergie des vagues selon la revendication 1, dans lequel les propriétés hydrodynamiques d'au moins un élément flottant (12) sont différentes des propriétés hydrodynamiques d'au moins une masse de réaction (14).

3. Appareil de conversion de l'énergie des vagues selon l'une quelconque des revendications précédentes, dans lequel la masse de réaction ou chaque masse de réaction (14) a au moins deux desdites liaisons mécaniques (16) raccordées à celle-ci de manière inclinée dans différentes directions.

4. Appareil de conversion de l'énergie des vagues selon l'une quelconque des revendications précédentes, dans lequel ledit au moins un élément extensible (16) comporte un moyen de sollicitation (7, 44) et/ou un amortisseur (9, 30, 42).

5. Appareil de l'énergie des vagues selon l'une quelconque des revendications précédentes, dans lequel ledit au moins un élément extensible comporte une pompe à tuyaux.

6. Appareil de conversion de l'énergie des vagues selon l'une quelconque des revendications précédentes, dans lequel chaque liaison mécanique (16C) comporte un câble raccordé à l'élément flottant ou l'un des éléments flottants (12) au moyen d'un bras de levier en porte-à-faux (40) ayant une première extrémité montée de manière pivotante sur ledit élément flottant (12) et une deuxième extrémité distale raccordée sur une extrémité de ladite liaison mécanique (16C), ledit au moins un élément extensible comportant un moyen de rappel sollicitant le bras de levier en porte-à-faux (40) dans une direction allant vers le haut.

7. Appareil de conversion de l'énergie des vagues selon l'une quelconque des revendications précédentes, dans lequel lesdits un ou plusieurs convertisseurs comprennent au moins une cellule magnéto-hydrodynamique, dans lequel la cellule magnéto-hydrodynamique comprend un électroaimant permettant de générer un champ magnétique, ce par quoi la puissance fournie à l'électroaimant peut être variée à des fins d'ajustement de la restriction de débit efficace de la cellule pour permettre la mise au point de l'appareil à des fins d'utilisation dans différentes conditions marines ou océaniques.

8. Appareil de conversion de l'énergie des vagues selon l'une quelconque des revendications précédentes, dans lequel la masse de réaction ou chaque masse de réaction (14) comporte une pluralité d'éléments de réaction, un moyen étant mis en oeuvre pour permettre un mouvement relatif entre ladite pluralité d'éléments de réaction, comprenant un ou plusieurs convertisseurs destinés à convertir l'énergie d'un tel mouvement en une puissance utile.

9. Appareil de conversion de l'énergie des vagues selon la revendication 8, dans lequel la masse de réaction ou chaque masse de réaction (14) comporte une pluralité d'éléments de réaction, la pluralité d'éléments de réaction et l'élément flottant (12) en provenance duquel ils sont suspendus étant agencés selon une configuration tridimensionnelle appropriée.

10. Appareil de conversion de l'énergie des vagues selon l'une quelconque des revendications précédentes, dans lequel lesdites une ou plusieurs masses de réaction (14) ont une forme sphérique, toroïdale ou elliptique et/ou dans lequel lesdits un ou plusieurs éléments flottants (12) ont une forme cylindrique.

11. Appareil de conversion de l'énergie des vagues selon l'une quelconque des revendications précédentes, dans lequel lesdites une ou plusieurs masses de réaction (14) comportent un corps creux ayant des orifices ou des ouvertures dans celui-ci.

12. Appareil de conversion de l'énergie des vagues selon l'une quelconque des revendications précédentes, dans lequel une ou plusieurs autres masses de réaction ou contrepoids (18, 24) sont raccordés auxdites une ou plusieurs masses de réaction (14) par le biais d'autres liaisons mécaniques non rigides allongées (20, 22).

13. Appareil de conversion de l'énergie des vagues selon la revendication 12, dans lequel lesdites autres liaisons mécaniques non rigides allongées (20, 22) comportent ou sont associées à un ou plusieurs convertisseurs destinés à convertir l'énergie cinétique d'un mouvement relatif entre la masse de réaction ou chaque masse de réaction et lesdites une ou plusieurs autres masses de réaction en une puissance utile.

14. Appareil de conversion de l'énergie des vagues selon l'une quelconque des revendications précédentes, comportant un seul desdits éléments flottants (12) et une seule desdites masses de réaction (14), ladite pluralité de liaisons mécaniques (16) s'étendant entre eux.

15. Appareil de conversion de l'énergie des vagues selon l'une quelconque des revendications 1 à 14, comportant une pluralité desdits éléments flottants (12) et une pluralité desdites masses de réaction (14B), une pluralité desdites liaisons mécaniques (16A) étant mises en ouvre entre ladite pluralité d'éléments flottants (12) et ladite pluralité de masses de réaction (14B), dans lequel chaque masse de réaction (14B) est raccordée à au moins deux éléments flottants adjacents (12) par des liaisons mécaniques respectives (16A), ce par quoi le mouvement relatif entre ladite pluralité de masses de réaction (14B) et ladite pluralité d'éléments flottants (12) et le fond marin à la fois dans une direction verticale et une direction horizontale peut être converti en une puissance utile.
